# EUROPEAN PATENT APPLICATION

(11) **EP 4 381 984 A1**
(43) Date of publication of application: **12.06.2024**
(21) Application number: 22852371.8
(22) Date of filing: 08.08.2022
(51) Int. Cl.: A43C 7/00, F16G 11/00

(54) **LACING DEVICE**

(30) Priority: 06.08.2021 CN 202110902575; 15.04.2022 CN 202220865022 U
(71) Applicant: Liu, Rongxing, Shantou, Guangdong 515041 (CN)
(72) Inventor: Liu, Rongxing, Shantou, Guangdong 515041 (CN)
(74) Representative: Ipey
(86) International application number: PCT/CN2022/110871
(87) International publication number: WO 2023/011661

(57) **Abstract**

Disclosed is a lacing device with relatively few components and simple, convenient assembly, comprising a base (1), a collar (3), a knob (6) and a winding wheel (2). The collar (3) is provided with a ratchet ring (34) which meshes with a pawl wheel (5). A concave portion is provided at a front end of the winding wheel (2), there being a gear ring (23) in the concave portion. A clutch wheel (4) is located in the concave portion, and at least one elastic engagement portion that can engage with or disengage from the gear ring (23) on the winding wheel (2) is provided on the clutch wheel (4). A guide rail (52) is provided on the pawl wheel (5) which retracts or releases the elastic engagement portion. The clutch wheel (4) is provided with a connector connecting to the knob (6), used for synchronously rotating the clutch wheel (4) and the knob (6). When the knob (6) rotates in one direction, the elastic engagement portion on the clutch wheel (4) meshes with the gear ring (23) on the winding wheel (2), such that the knob (6), the pawl wheel (5), the clutch wheel (4) and the winding wheel (2) synchronously rotate and stop. When the knob (2) rotates in the opposite direction, the elastic meshing portion on the clutch wheel (4) is disengaged from the gear ring (23) on the winding wheel (2), and the winding wheel (2) freely rotates.

## Description

### TECHNICAL FIELD

The present disclosure relates to a lacing device used for winding and loosening laces such as shoelaces in clothes, shoes, hats or daily necessities.

### BACKGROUND

Lacing devices used in clothes, shoes, hats or daily necessities are popular among consumers because of quick and easy winding and unwinding of laces such as shoelaces, and their technical schemes are widely disclosed in patent documents, such as those disclosed in CN105982392A, CN106572723A, CN104470394A, CN205585439U, CN205611924U, and CN206413842U. This type of lacing device generally includes a base and a collar connected to the base. A winding wheel for winding the lace is provided in the collar, and a ratchet ring is provided on the collar. A ratchet wheel connected to a knob is meshed with the ratchet ring so that the knob can only rotate in one direction. An axial gear connector is provided between the winding wheel and the knob. When the knob is pressed, the axial gear connector is engaged, and the winding wheel rotates synchronously with the knob. When the knob is rotated, the lace is wound in the winding wheel. When the knob is pulled up, the axial gear connector is separated and the winding wheel can rotate freely and the lace can be loosened by pulling the lace. Because of a small size of the lacing device, a certain force is required to pull out or press the knob, which is inconvenient and sometimes even difficult.

In addition to the above-described axial gear connector, a radial gear connector can be provided for engagement between the winding wheel and the knob, such as a one-way rotation stop knob disclosed in CN105159393A, in which a one-way locking mechanism to install a locking piece between a side wall of a knob cover and a ratchet sleeve, and locking and unlocking of counterclockwise rotation of the knob cover can be controlled by pressing the locking piece, but the locking piece is too small and it is difficult to press it by hand. A rope winding device disclosed in CN110921437A is provided with a movable part on its rotating part, which is configured to cooperated with a rope winding part when the rotating part rotates in a rope winding direction, so as to solve engagement and disengagement between the rotating part and the rope winding part in a radial direction, but with many parts, complicated production of the parts, complicated assembly, and high cost. An automatic lacing device disclosed in CN205432385U includes an outer cover, a rotating outer ring, a ratchet disc, a winding disc, a gear ring base and an elastic piece provided on the ratchet disc sleeved in sequence, but with many parts, complicated production of the parts, complicated assembly, and high cost. A rope fast retracting device is disclosed in CN213059713U, in which an upper end face of the winding wheel is provided with a convex gear teeth, and a baffle is controlled to be clamped on both sides of the convex gear teeth to realize engagement and disengagement between a winding wheel and a knob, but with many parts, complicated production of the parts, complicated assembly, and high cost.

### SUMMARY

An object of the present disclosure is to provide a novel lacing device, which has fewer parts and can be assembled simply and conveniently.

The lacing device of the present disclosure includes a base; a collar connected to the base, the collar being provided with a through hole for threading a lace; and a rotatable knob located on the collar. A winding wheel for winding the lace is provided in the collar, a ratchet ring is provided at a front end of the collar, and a pawl wheel is engaged with the ratchet ring. The lacing device is characterized in that a concave part is provided at a front end of the winding wheel, a gear ring is provided in the concave part, and the clutch wheel is located in the concave part, the clutch wheel is provided with at least one elastic engagement part which can be engaged with or disengaged from the gear ring on the winding wheel; the pawl wheel is provided with a guide rail for retracting or releasing the elastic engagement part; the clutch wheel is provided with a connecting piece to connect the knob to synchronously rotate the clutch wheel and the knob; and when the knob is rotated in one direction, the elastic engagement part on the clutch wheel is engaged with the gear ring on the winding wheel to synchronously rotate or stop the knob, the pawl wheel, the clutch wheel and the winding wheel ; and when the knob is rotated in an opposite direction, the elastic engagement part on the clutch wheel is disengaged from the gear ring on the winding wheel, and the winding wheel can be rotated freely.

Preferably, the elastic engagement part includes an elastic arm and an engagement part engaged with or disengaged from the gear ring on the winding wheel, and the engagement part is provided with guide posts which are located in the guide rail of the pawl wheel.

Preferably, a limiting step is respectively provided at a front end and a rear end of the guide rail, and guide posts are located at the front end and the rear end of the guide rail, such that an elastic force generated by deformation of the elastic arm pushes the guide posts into respective limiting steps.

Preferably, the guide posts are exposed above the guide rail, and the knob is provided with a locking block which can lock the guide posts exposed above the guide rail. The locking block is provided with a sliding ramp for the guide posts to slide, and a limit groove is provided at an upper end of the sliding ramp. When the knob is rotated, the guide posts slide relatively between the sliding ramp and the limit groove. A connecting piece is provided between the clutch wheel and the knob, the connecting piece is a cylinder at a center of the clutch wheel, and the cylinder has a sector inserting cavity at its center. The ratchet wheel is provided with a through hole for the cylinder to pass through, a sector inserting post which has a same radius as the sector inserting cavity and a vertex angle smaller than the inserting cavity is provided below the knob, and the sector inserting post is inserted into the sector inserting cavity.

Preferably, the gear ring is an internal gear located at a periphery of the concave part or an external gear protruding at a center of the concave part.

Preferably, the connecting piece on the clutch wheel is a cylinder at the center of the clutch wheel, and an inserting cavity is provided at a center of the cylinder, the pawl wheel is provided with a through hole for the cylinder to pass through, and an inserting post with a shape matched with the inserting cavity is provided below the knob, and the inserting post is inserted into the inserting cavity.

Preferably, the knob is provided with at least one driver, and the pawl wheel is provided with a step docked with the at least one driver. When the knob rotates in a rotation direction of the pawl wheel, the step on the pawl wheel is docked with the driver of the pawl wheel.

Preferably, the connecting piece on the clutch wheel includes at least two cylindrical bodies which are rotationally symmetrical, and inserting holes with shapes and positions matched with the at least two cylindrical bodies are provided at the bottom of the knob, and the at least two cylindrical bodies are inserted into the inserting holes, and the pawl wheel is provided with channels for respective ones of the at least two cylindrical bodies to pass through. When the knob rotates in the rotation direction of the pawl wheel, the at least two cylindrical bodies are abutted against ends of the channels on the pawl wheel so as to provide rotational torque to the pawl wheel.

The lacing device according to the present disclosure is convenient to use, and can quickly wind up the lace by rotating forward, and can loosen the lace by reversely rotating by an angle, thus avoiding inconvenience due to pulling out of the knob with fingertips. Because such products are made of plastic materials with less consumables, manufacturing cost is mainly determined by a number of parts and convenience of assembly. In the present disclosure, the number of parts is reduced, and an assembly process can be completed by sequentially sleeving and buckling the base- the winding wheel- the collar- the clutch wheelthe pawl wheel- the knob, with simple and convenient assembly and greatly reduced cost.

### BRIEF DESCRIPTION OF DRAWINGS

FIG. 1 is a diagram of parts according to an embodiment of the present disclosure.
FIG. 2 is a diagram of FIG. 1 from another perspective.
FIG. 3 is a diagram showing a matching state of guide posts and a guide rail when a clutch wheel is engaged with a winding wheel.
FIG. 4 is a diagram showing a matching state of the guide posts and the guide rail when the clutch wheel is disengaged from the winding wheel.
FIG. 5 is a schematic diagram of an engaging state of the clutch wheel and the winding wheel.
FIG. 6 is a schematic diagram of a disengaging state of the clutch wheel and the winding wheel.
FIG. 7 is an outside view of an assembled finished product according to an embodiment of FIG. 1.
FIG. 8 is a central axial sectional view of FIG. 7.
FIG. 9 is a diagram of parts according to another embodiment of the present disclosure.
FIG. 10 is a diagram of FIG. 7 from another perspective.
FIG. 11 is a diagram showing a matching state of guide posts and a guide rail when a clutch wheel is engaged with a winding wheel according to another embodiment.
FIG. 12 is a diagram showing a matching state of the guide posts and the guide rail when the clutch wheel is disengaged with the winding wheel according to another embodiment.
FIG. 13 is a diagram of parts according to yet another embodiment of the present disclosure.
FIG. 14 is a diagram of FIG. 13 from another perspective.
FIG. 15 is a diagram showing a matching state of guide posts and a guide rail when a clutch wheel is engaged with a winding wheel according to yet another embodiment.
FIG. 16 is a diagram showing a matching state of the guide posts and the guide rail when the clutch wheel is disengaged with the winding wheel according to yet another embodiment.
FIG. 17 is a schematic diagram of an engaging state of the clutch wheel and the winding wheel according to yet another embodiment.
FIG. 18 is a schematic diagram of a disengaging state of the clutch wheel and the winding wheel according to yet another embodiment.
FIG. 19 is an outside view of an assembled finished product according to an embodiment of FIG. 13.
FIG. 20 is a central axial sectional view of FIG. 19.
FIG. 21 is a diagram showing a matching state of guide posts and a locking block when a clutch wheel is engaged with a winding wheel according to yet another embodiment.
FIG. 22 is a diagram showing a matching state of guide posts and a locking block when a clutch wheel is disengaged with a winding wheel according to yet another embodiment.

Reference Numeral: 1- Base; 11, 12-Threading hole; 2- Winding Wheel; 21-Through Hole; 22- Concave Part; 23- Gear Ring; 3- Collar; 31, 32- Through Hole; 33- Threading Tab; 34- Ratchet Ring; 4- Clutch Wheel; 41- Elastic Arm; 42- Engagement Part; 43- Guide Post; 44- Hollow Cylinder; 45- Inserting Cavity; 5- Pawl Wheel; 51- Pawl; 52- Guide Rail; 53-Limiting Step; 54- Limiting Step; 55- Through Hole; 56- Steps; 6- Knob; 61- Inserting Post; 62-Driver.
101- Base; 111, 112- Threading hole; 102- Winding Wheel; 121- Through Hole; 122-Concave Part; 123- Gear Ring; 103- Collar; 131, 132- Through Hole; 133-Threading Tab; 134- Ratchet Ring; 104-Clutch Wheel; 141- Elastic Arm; 142- Engagement Part; 143- Guide Post; 144- Cylindrical Body; 146- Annular Body; 105- Pawl Wheel; 151- Pawl; 152- Guide Rail; 153- Limiting Step; 154- Limiting Step; 155- Through Hole; 156- Step; 106- Knob; 163-Inserting Hole.
201- Base; 211, 212- Threading hole; 202- Winding Wheel; 221- Through Hole; 222-Concave Part; 223- Gear Ring; 203- Collar; 231, 232- Through Hole; 233- Threading Tab; 234- Ratchet Ring; 204- Clutch Wheel; 241- Elastic Arm; 242- Engagement Part; 243- Guide Post; 244- Hollow Cylinder; 245- Inserting Cavity; 205- Pawl Wheel; 251- Pawl; 252- Guide Rail; 253- Limiting Step; 254- Limiting Step; 255- Through Hole; 256- Step; 206- Knob; 261-Inserting Post; 262- Driver, 263- Locking Block, 264- Sliding Ramp, 265- Limit Groove, 266-One Radial Side of Sector Inserting Post 261, and 267- The Other Radial Side of Sector Inserting Post.

### DETAILED DESCRIPTION

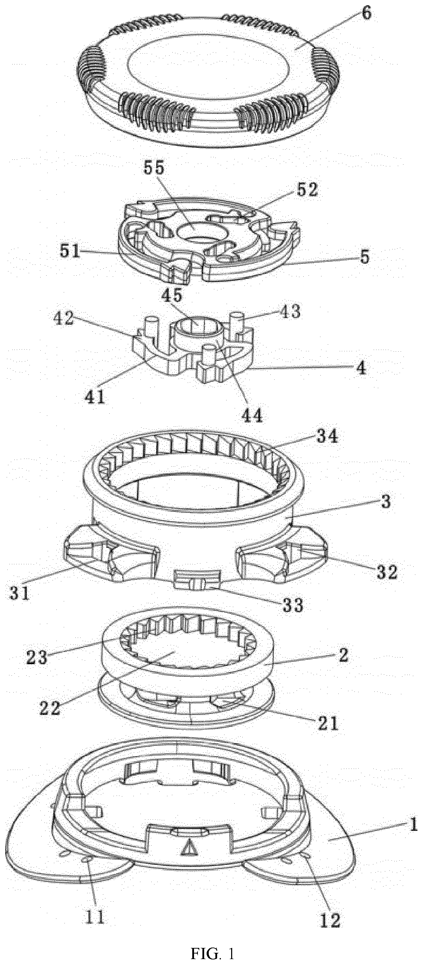

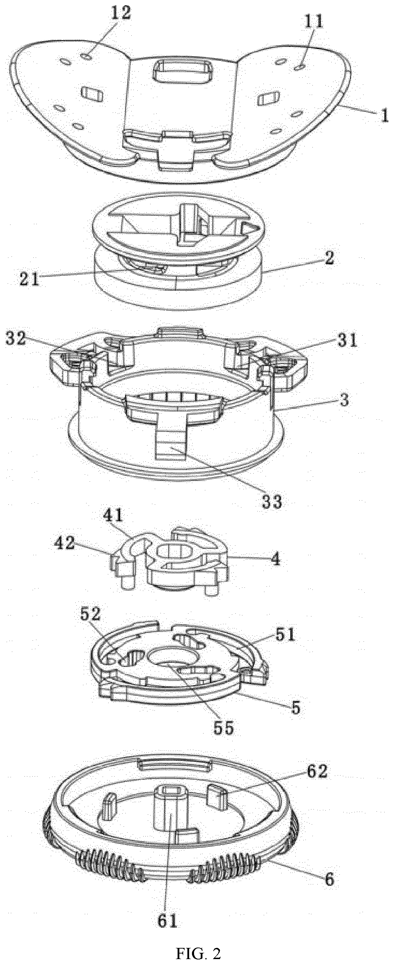

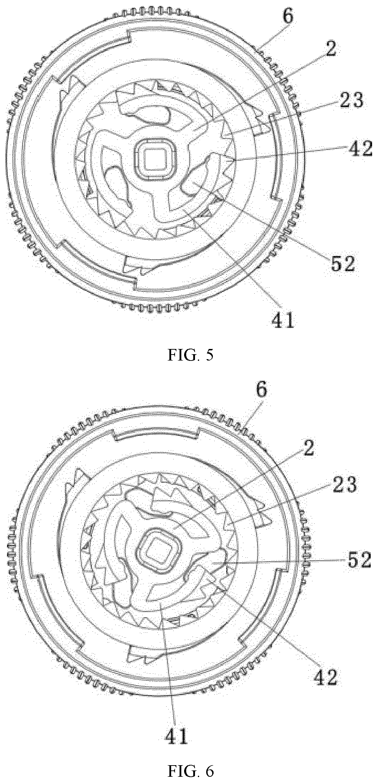

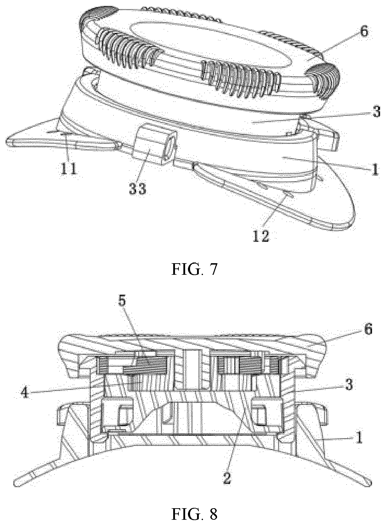

FIGS. 1 to 8 show a lacing device according to an embodiment of the present disclosure. The lacing device includes a base 1, a winding wheel 2, a collar 3, a clutch wheel 4, a pawl wheel 5 and an upper knob 6. The collar 3 is connected to the base 1 through a buckling part matched with the base 1. The winding wheel 2 is located in an inner cavity of the collar 3, and is configured for winding or releasing a lace. The winding wheel 2 is an I-shaped wheel, and a surface of the I-shaped wheel is provided with a through hole 21 for passing through the lace. A barrel of the collar 3 is provided with several through holes 31, 32 for passing through the lace. The lace can pass through the collar 3 from the through hole 31, via the through hole 21 of the winding wheel 2, and out of the through hole 32 of the collar 3; or two ends of the lace can pass through the collar 3 from the through hole 31 and the through hole 32 respectively, and then pass through the through hole 21 and are tied at the winding wheel 2. When the winding wheel 2 is rotated, the lace can be wound on the I-shaped wheel surface of the winding wheel 2, thereby tightening the lace. The base 1 or the collar 3 may also have a plurality of threading tabs 33 or threading holes 11 and 12 to facilitate fixing the base 1 of the lacing device to the clothes, shoes and hats.

A concave part 22 is provided at an upper end of the winding wheel 2, and a gear ring 23 is provided at an edge of the concave part 22. The clutch wheel 4 is located in the concave part 22, and three rotationally symmetrical elastic arms 41 are provided on the clutch wheel 4. An engagement part 42 which can be engaged with the gear ring 23 on the winding wheel 2 is provided at an end of the elastic arm 41, and the engagement part 42 of the elastic arm 41 is provided with a guide post 43. A hollow cylinder 44 is provided at a center of the clutch wheel 4 and a polyhedral inserting cavity 45 is provided at a center of the cylinder 44, and the cylinder 44 passes through a through hole 55 at a middle of the pawl wheel 5. A polyhedral inserting post 61 with a shape matched with the inserting cavity 45 is provided below the knob 6, and the inserting post 61 is inserted into the inserting cavity 45, so that the clutch wheel 4 and the knob 6 rotate synchronously.

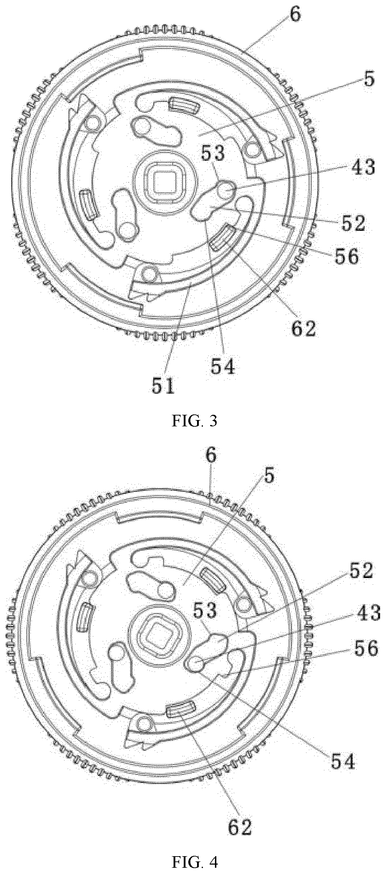

A ratchet ring 34 is provided inside an upper end of the collar 3. The pawl wheel 5 is located above the clutch wheel 4. The pawl wheel 5 is provided with three rotationally symmetrical pawls 51 which are engaged with the ratchet ring 34 so that the pawl wheel 5 can rotate clockwise and unidirectionally relative to the collar 3. Three rotationally symmetrical guide rails 52 are provided below the pawl wheel 5. When a front end of the guide rail is away from its axis so that the guide post 43 is located at the axis, the engagement part 42 is engaged with the gear ring 23 on the winding wheel 2, and when a rear end of the guide rail is proximate to the axis so that the guide post 43 is located at the axis, the engagement part 42 is disengaged from the gear ring 23 on the winding wheel 2. A limiting step 53 is provided at one, proximate to the axis, of two sides of a channel of the guide rail 52 at the front end of the guide rail (as shown in FIGS. 3 and 4), and a limiting step 54 is provided at one, away from the axis, of two sides of a channel of the guide rail 52 at the rear end of the guide rail. The guide post 43 of the clutch wheel 4 is located in the guide rail 52. When the knob 6 is rotated clockwise to drive the clutch wheel 4 to rotate clockwise, the guide post 43 reaches the front end of the guide rail 52 along the guide rail 52, and the engagement part 42 is engaged with the gear ring 23 of the winding wheel 2, so that the clutch wheel 4 and the winding wheel 2 are cooperated to rotate synchronously. A centripetal elastic force generated by radial outward bending deformation of the elastic arm 41 pushes the guide post 43 into the limiting step 53, so that the pawl wheel 5 and the clutch wheel 4 are cooperated to rotate synchronously. Because it is necessary to overcome the elastic force of the elastic arm 41 for the guide post 43 to loosen from the limiting step 53 in a reverse direction, cooperation of the guide post 43 and the limiting step 53 can prevent the engagement part 42 from loosening in the reverse direction, resulting in loosening of the lace wound by the winding wheel 2. When the knob 6 is rotated by applying a certain torque counterclockwise, the guide post 43 is disengaged from the limiting step 53 and moved to the rear end of the guide rail 52, and the engagement part 42 is disengaged from the gear ring 23 of the winding wheel 2, so that the winding wheel 2 can rotate freely. An outward elastic force generated by the radial centripetal bending deformation of the elastic arm 41 pushes the guide post 43 into the limiting step 54. Because it is necessary to overcome the elastic force of the elastic arm 41 for the guide post 43 to loosen from the limiting step 54 in a reverse direction, cooperation of the guide post 43 and the limiting step 54 can prevent the engagement part 42 from rebounding and jamming the gear ring 23, resulting in blocking of the winding wheel 2.

Three rotationally symmetrical drivers 62 are provided below the knob 6, and the pawl wheel 5 is provided a step 56 docked with the drivers 62 (see FIGS. 3 and 4). When the knob 6 is rotated clockwise, the driver 62 is abutted against the step 56. The driver 62 drives the pawl wheel 5 to rotate clockwise together with the clutch wheel 4, and the driver 62 provides an auxiliary rotating torque for the pawl wheel 5.

When the knob 6 is rotated clockwise, the guide post 43 on the clutch wheel 4 advances along the guide rail 52 and enters the limiting step 53, and the clutch wheel 4 is cooperated with the pawl wheel 5, and the engagement part 42 on the clutch wheel 4 is engaged with the gear ring 23 on the winding wheel 2 so that the clutch wheel 4 is cooperated with the winding wheel 2. At this time, the winding wheel 2, the clutch wheel 4, the pawl wheel 5 and the knob 6 are cooperated to rotate synchronously, and the winding wheel 2 winds up the lace. When the knob 6 stops rotating, one-way locking action of the pawl wheel 5 makes the winding wheel 2 unable to rotate reversely, and the wound lace may not loosen. When the knob 6 is rotated counterclockwise with a certain force, because the pawl wheel 5 cannot rotate reversely, the guide post 43 of the clutch wheel 4 leaves the limiting step 53 of the pawl wheel 5 and retreats along the guide rail 52 to the rear end of the guide rail 52 into the limiting step 54, and the engagement part 42 on the clutch wheel 4 is disengaged from the gear ring 23 on the winding wheel 2, so that the winding wheel 2 can rotate freely, and the lace can be loosened by pulling it from outside of the lacing device.

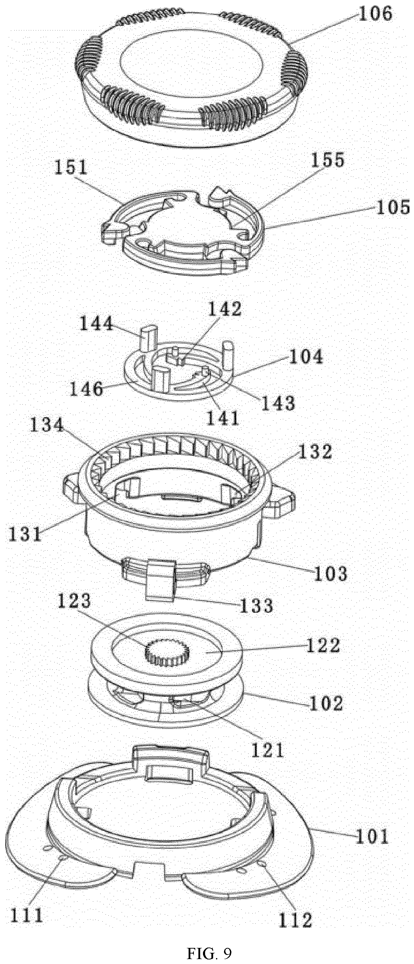

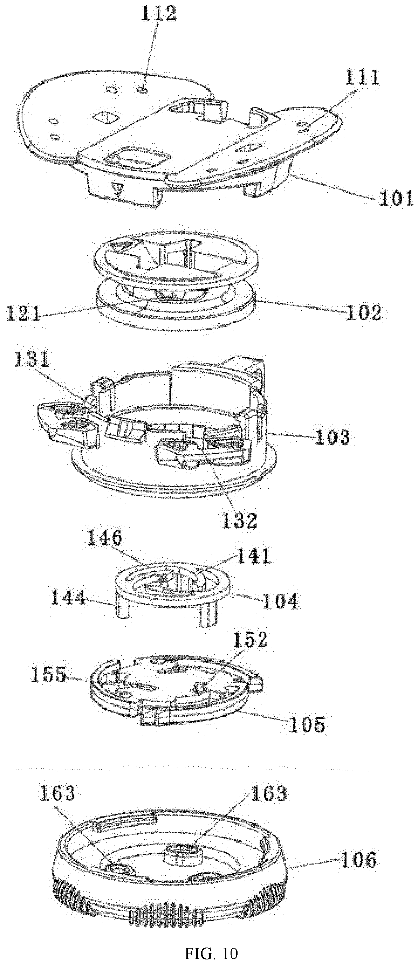

FIGS. 9 to 12 shows a lacing device according to another embodiment of the present disclosure, including a base 101, a winding wheel 102, a collar 103, a clutch wheel 104, a pawl wheel 105 and an upper knob 106. The collar 103 is connected to the base 101 through a buckling part matched with the base 101. The winding wheel 102 is located in an inner cavity of the collar 103, and is configured for winding or releasing a lace. The winding wheel 102 is an I-shaped wheel, and a surface of the I-shaped wheel is provided with a through hole 121 for passing through the lace. A barrel of the collar 103 is provided with several through holes 131, 132 for passing through the lace. The lace can pass through the collar 103 from the through hole 131, via the through hole 121 of the winding wheel 102, and out of the through hole 132 of the collar 103; or two ends of the lace can pass through the collar 103 from the through hole 131 and the through hole 132 respectively, and then pass through the through hole 121 and are tied at the winding wheel 102. When the winding wheel 102 is rotated, the lace can be wound on the I-shaped wheel surface of the winding wheel 102, thereby tightening the lace. The base 101 or the collar 103 may also have a plurality of threading tabs 133 or threading holes 111 and 112 to facilitate fixing the base 101 of the lacing device to the clothes, shoes and hats.

A concave part 122 is provided at an upper end of the winding wheel 102, and a protruding gear ring 123 is provided at a center of the concave part 122. The clutch wheel 104 is located in the concave part 122. The clutch wheel 104 includes an annular body 146 and three symmetrically rotating elastic arms 141 extending toward the center. An engagement part 142 which can be engaged with or disengaged from the gear ring 123 on the winding wheel 102 is provided at an end of the elastic arm 141, and the engagement part 142 of the elastic arm 141 is provided with a guide post 143. The annular body 146 has three flat cylindrical bodies 144 which are rotationally symmetrical, and the cylindrical bodies 144 pass through the through holes 155 at respective positions of the pawl wheel 105. Three inserting holes 163 with shapes and positions matched with the flat cylindrical bodies 144 are provided at the bottom of the knob 106. The flat cylindrical bodies 144 are inserted into the inserting holes 163, so that the clutch wheel 104 and the knob 106 rotate synchronously.

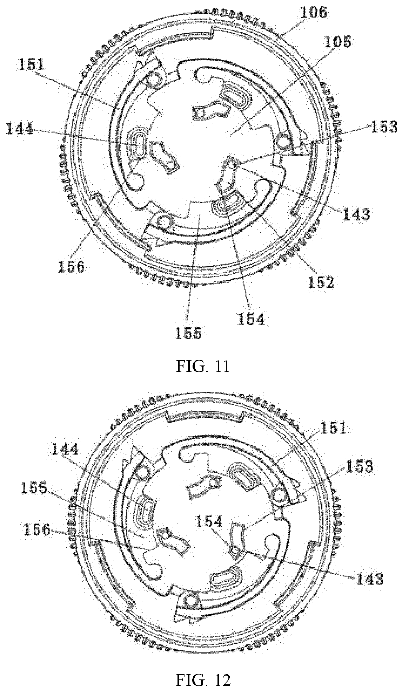

A ratchet ring 134 is provided inside an upper end of the collar 103. The pawl wheel 105 is located above the clutch wheel 104. The pawl wheel 105 is provided with three rotationally symmetrical pawls 151 which are engaged with the ratchet ring 134 so that the pawl wheel 105 can rotate clockwise and unidirectionally relative to the collar 103. Three rotationally symmetrical guide rails 152 are provided below the pawl wheel 105. When a front end of the guide rail is proximate to its axis so that the guide post 143 is located at the axis, the engagement part 142 is engaged with the gear ring 123 on the winding wheel 102, and when a rear end of the guide rail is away from the axis so that the guide post 143 is located at the axis, the engagement part 142 is disengaged from the gear ring 23 on the winding wheel 2. A limiting step 153 is provided at one, away from the axis, of two sides of a channel of the guide rail 152 at the front end of the guide rail (as shown in FIGS. 11 and 12), and a limiting step 154 is provided at one, proximate to the axis, of two sides of a channel of the guide rail 152 at the rear end of the guide rail. The guide post 143 of the clutch wheel 104 is located in the guide rail 152. When the knob 106 is rotated clockwise to drive the clutch wheel 104 to rotate clockwise, the guide post 143 reaches the front end of the guide rail 152 along the guide rail 152, and the engagement part 142 is engaged with the gear ring 123 of the winding wheel 102, so that the clutch wheel 104 and the winding wheel 102 are cooperated to rotate synchronously. An outward elastic force generated by radial centripetal bending deformation of the elastic arm 141 pushes the guide post 143 into the limiting step 153, so that the pawl wheel 105 and the clutch wheel 104 are cooperated to rotate synchronously. Because it is necessary to overcome the elastic force of the elastic arm 141 for the guide post 143 to loosen from the limiting step 153 in a reverse direction, cooperation of the guide post 143 and the limiting step 153 can prevent the engagement part 142 from loosening in the reverse direction, resulting in loosening of the lace wound by the winding wheel 102. When the knob 106 is rotated by applying a certain torque counterclockwise, the guide post 143 is disengaged from the limiting step 153 and moved to the rear end of the guide rail 152, and the engagement part 142 is disengaged from the gear ring 123 of the winding wheel 102, so that the winding wheel 102 can rotate freely. A centripetal elastic force generated by the radial outward bending deformation of the elastic arms 141 pushes the guide post 143 into the limiting step 154. Because it is necessary to overcome the elastic force of the elastic arm 141 for the guide post 143 to loosen from the limiting step 154 in a reverse direction, cooperation of the guide post 143 and the limiting step 154 can prevent the engagement part 142 from rebounding and jamming the gear ring 123, resulting in blocking of the winding wheel 102.

When the knob 106 is rotated clockwise, the guide post 143 on the clutch wheel 104 advances along the guide rail 152 and enters the limiting step 153, and the clutch wheel 104 is cooperated with the pawl wheel 105, and the engagement part 142 on the clutch wheel 104 is engaged with the gear ring 123 on the winding wheel 102 so that the clutch wheel 104 is cooperated with the winding wheel 102. At the same time, the flat cylindrical bodies 144 is abutted against a step 156 of the through hole 155 of the pawl wheel 105, providing an auxiliary rotating torque for the ratchet wheel 105. At this time, the winding wheel 102, the clutch wheel 104, the pawl wheel 105 and the knob 106 are cooperated to rotate synchronously, and the winding wheel 102 winds up the lace. When the knob 106 stops rotating, one-way locking action of the pawl wheel 105 makes the winding wheel 102 unable to rotate reversely, and the wound lace may not loosen. When the knob 106 is rotated counterclockwise with a certain force, because the pawl wheel 105 cannot rotate reversely, the guide post 143 of the clutch wheel 104 leaves the limiting step 153 of the pawl wheel 105 and retreats along the guide rail 152 to the rear end of the guide rail 152 into the limiting step 154, and the engagement part 142 on the clutch wheel 104 is disengaged from the gear ring 123 on the winding wheel 102, so that the winding wheel 102 can rotate freely, and the lace can be loosened by pulling it from outside of the lacing device.

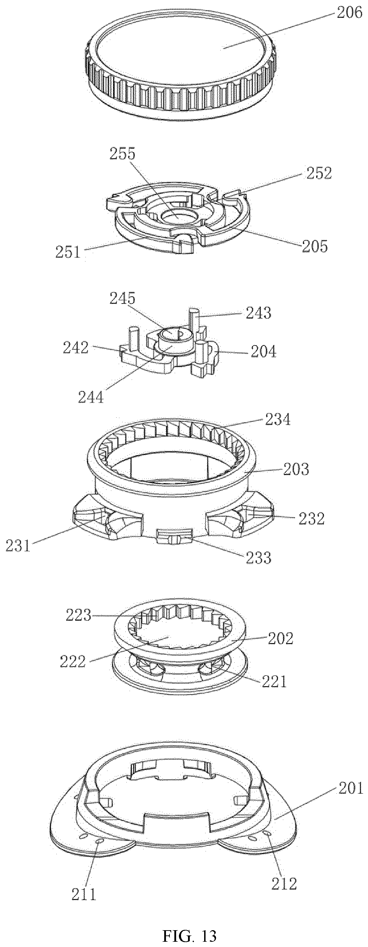

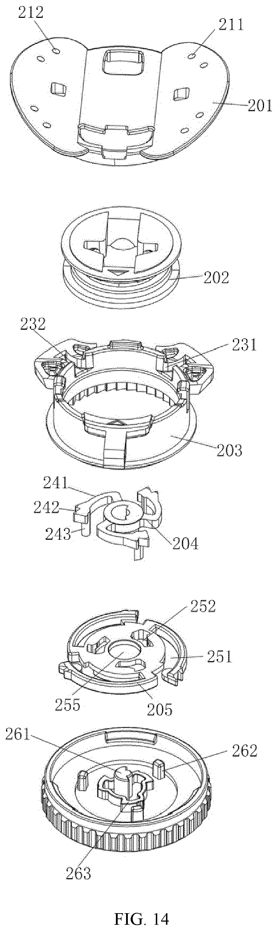

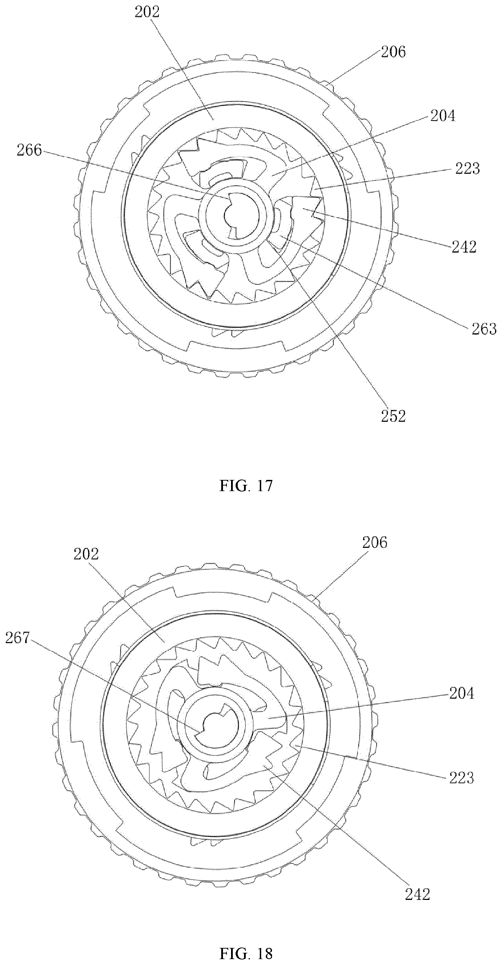

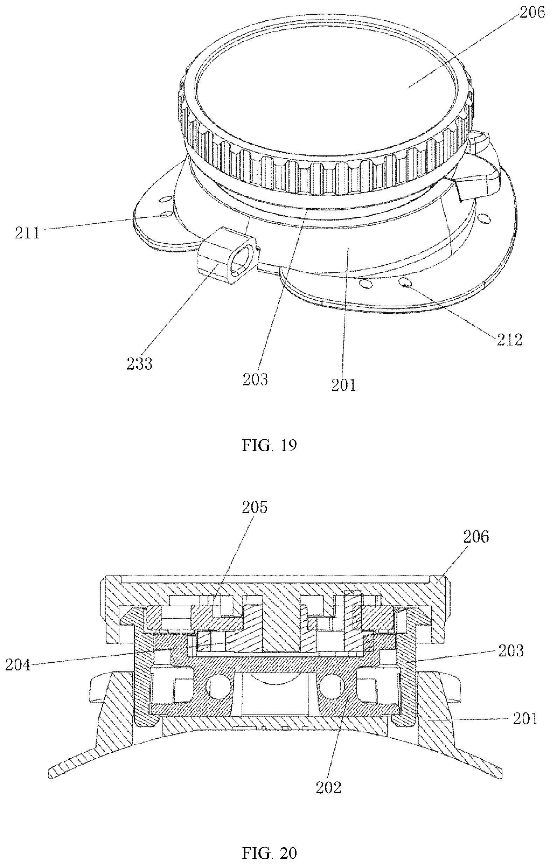

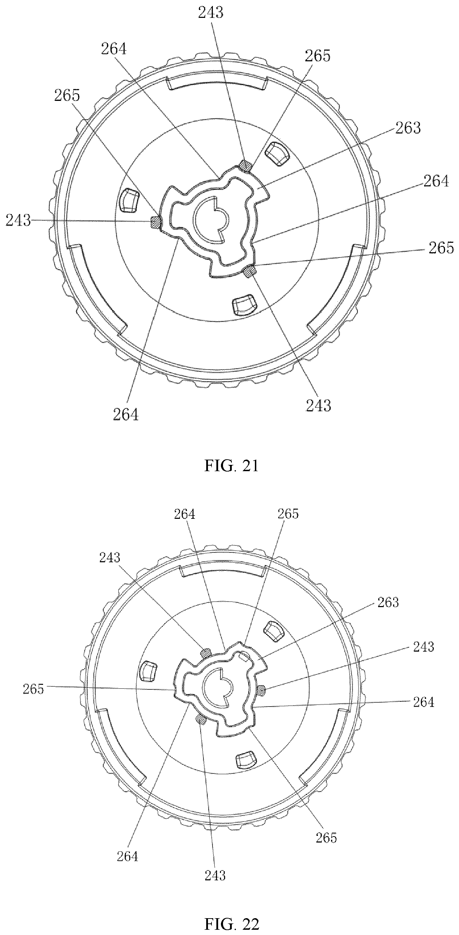

FIGS. 13 to 22 show a lacing device according to yet another embodiment of the present disclosure. The lacing device includes a base 201, a winding wheel 202, a collar 203, a clutch wheel 204, a pawl wheel 205 and an upper knob 206. The collar 203 is connected to the base 201 through a buckling part matched with the base 201. The winding wheel 202 is located in an inner cavity of the collar 203, and is configured for winding or releasing a lace. The winding wheel 202 is an I-shaped wheel, and a surface of the I-shaped wheel is provided with a through hole 221 for passing through the lace. A barrel of the collar 203 is provided with several through holes 231, 232 for passing through the lace. The lace can pass through the collar 203 from the through hole 231, via the through hole 221 of the winding wheel 202, and out of the through hole 232 of the collar 203; or two ends of the lace can pass through the collar 203 from the through hole 231 and the through hole 232 respectively, and then pass through the through hole 221 and are tied at the winding wheel 202. When the winding wheel 202 is rotated, the lace can be wound on the I-shaped wheel surface of the winding wheel 202, thereby tightening the lace. The base 201 or the collar 203 may also have a plurality of threading tabs 233 or threading holes 211 and 212 to facilitate fixing the base 201 of the lacing device to the clothes, shoes and hats.

A concave part 222 is provided at an upper end of the winding wheel 202, and a gear ring 223 is provided at an edge of the concave part 222. The clutch wheel 204 is located in the concave part 222, and three rotationally symmetrical elastic arms 241 are provided on the clutch wheel 204. An engagement part 242 which can be engaged with the gear ring 223 on the winding wheel 202 is provided at an end of the elastic arm 241, and the engagement part 242 of the elastic arm 241 is provided with a guide post 243. A hollow cylinder 244 is provided at a center of the clutch wheel 204 and a sector inserting cavity 245 is provided at a center of the cylinder 244, and the cylinder 244 passes through a through hole 255 at a middle of the pawl wheel 205. A sector inserting post 261 which has a same radius as the sector inserting cavity 245 and a vertex angle smaller than the inserting cavity 245 is provided below the knob 206, and the sector inserting post 261 is inserted into the sector inserting cavity 245.

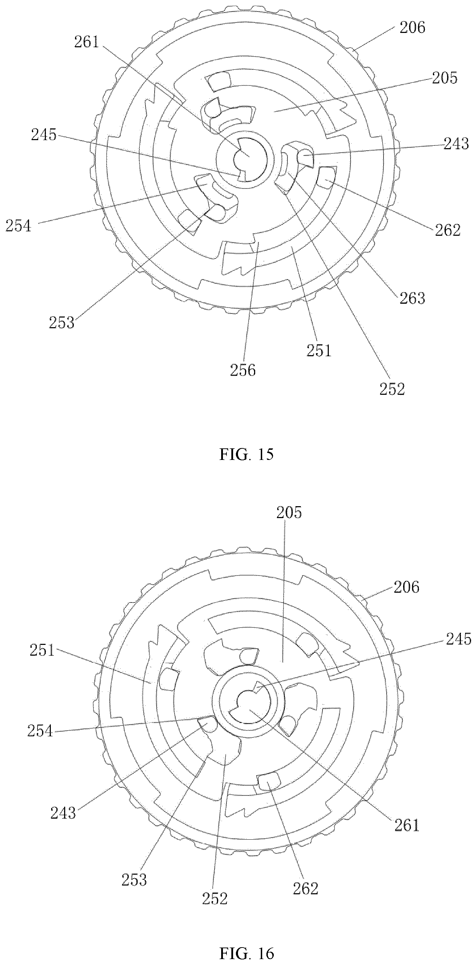

A ratchet ring 234 is provided inside an upper end of the collar 203. The pawl wheel 205 is located above the clutch wheel 204. The pawl wheel 205 is provided with three rotationally symmetrical pawls 251 which are engaged with the ratchet ring 234 so that the pawl wheel 205 can rotate clockwise and unidirectionally relative to the collar 203. Three rotationally symmetrical through-hole type guide rails 252 are provided below the pawl wheel 205. When a front end of the guide rail is away from its axis so that the guide post 243 is located at the axis, the engagement part 242 is engaged with the gear ring 223 on the winding wheel 202, and when a rear end of the guide rail is proximate to the axis so that the guide post 243 is located at the axis, the engagement part 242 is disengaged from the gear ring 223 on the winding wheel 202. A limiting step 253 is provided in a channel of the guide rail 252 at the front end of the guide rail (as shown in FIGS. 15 and 16), and a limiting step 254 is provided in a channel of the guide rail 252 at the rear end of the guide rail. The guide post 243 of the clutch wheel 204 passes through the guide rail 252 and is exposed above the guide rail 252. A locking block 263 is provided at a middle of the knob 206. The guide post 243 exposed on the guide rail 252 is located on a sliding ramp 264 of the locking block 263, and a limit groove 265 is provided at an end of the sliding ramp 264. When the knob 206 is rotated clockwise, after the knob 206 rotates by an angle, one radial side 266 of the sector inserting post 261 contacts with the sector inserting cavity 245 to drive the clutch wheel 204 to rotate clockwise, the guide post 243 reaches the limiting step 253 at the front end of the guide rail 252 along the guide rail 252, and the engagement part 242 is engaged with the gear ring 223 of the winding wheel 202, so that the clutch wheel 204, the pawl wheel 205 and the winding wheel 202 are cooperated together to rotate synchronously, and at the same time, the guide post 243 exposed above the guide rail 252 slides to the limit groove 265 along the sliding ramp 264 of the locking block 263, so that the guide post 243 and the knob 206 are locked with each other, and the guide post 243 cannot be loosened from the limiting step 253, and thus the knob 206 may not be automatically loosened in a reverse direction without reverse twisting. When the knob 206 is rotated by applying a certain torque counterclockwise, the guide post 243 slides from the limit groove 265 to the sliding ramp 264, the locking block 263 releases the guide post 243, and after the knob 206 is rotated by an angle, the other radial side 267 of the sector inserting post 261 contacts the sector inserting cavity 245 to push the clutch wheel 204 to rotate counterclockwise. The guide post 243 is disengaged from the limiting step 253 and moved into the limiting step 254 at the rear end of the guide rail 252. The engagement part 242 is disengaged from the gear ring 223 of the winding wheel 202, and the winding wheel 202 can rotate freely. Because it is necessary to overcome an elastic force of the elastic arm 241 for the guide post 243 to loosen from the limiting step 254 in a reverse direction, cooperation of the guide post 243 and the limiting step 254 can prevent the engagement part 242 from rebounding and jamming the gear ring 223, resulting in blocking of the winding wheel 202.

Three rotationally symmetrical drivers 262 are provided below the knob 206, and the pawl wheel 205 is provided a step 256 docked with the drivers 262 (see FIGS. 15 and 16). When the knob 206 is rotated clockwise, the driver 262 is abutted against the step 256. The driver 262 drives the pawl wheel 205 to rotate clockwise together with the clutch wheel 204, and the driver 262 provides an auxiliary rotating torque for the pawl wheel 205.

When the knob 206 is rotated clockwise, the guide post 243 on the clutch wheel 204 advances along the guide rail 252 and enters the limiting step 253, the locking block 263 and the guide post 243 are locked with each other at the same time, and the clutch wheel 204 is cooperated with the pawl wheel 205, and the engagement part 242 on the clutch wheel 204 is engaged with the gear ring 223 on the winding wheel 202 so that the clutch wheel 204 is cooperated with the winding wheel 202. At this time, the winding wheel 202, the clutch wheel 204, the pawl wheel 205 and the knob 206 are cooperated to rotate synchronously, and the winding wheel 202 winds up the lace. When the knob 206 stops rotating, one-way locking action of the pawl wheel 205 makes the winding wheel 202 unable to rotate reversely, and the wound lace may not loosen. When the knob 206 is rotated counterclockwise with a certain force, because the pawl wheel 205 cannot rotate reversely, the locking block 263 releases the guide post 243, the guide post 243 of the clutch wheel 204 leaves the limiting step 253 of the pawl wheel 205 and retreats along the guide rail 252 to the rear end of the guide rail 252 into the limiting step 254, and the engagement part 242 on the clutch wheel 204 is disengaged from the gear ring 223 on the winding wheel 202, so that the winding wheel 202 can rotate freely, and the lace can be loosened by pulling it from outside of the lacing device.

## Claims

1. A lacing device, comprising: a base; a collar connected to the base, the collar being provided with a through hole for threading a lace; and a rotatable knob located on the collar, wherein a winding wheel for winding the lace is provided in the collar, a ratchet ring is provided at a front end of the collar, and a pawl wheel is engaged with the ratchet ring, and wherein a concave part is provided at a front end of the winding wheel, a gear ring is provided in the concave part, and the clutch wheel is located in the concave part, the clutch wheel is provided with at least one elastic engagement part which is engaged with or disengaged from the gear ring on the winding wheel; the pawl wheel is provided with a guide rail for retracting or releasing the elastic engagement part; the clutch wheel is provided with a connecting piece to connect the knob to synchronously rotate the clutch wheel and the knob; and when the knob is rotated in a direction, the elastic engagement part on the clutch wheel is engaged with the gear ring on the winding wheel to synchronously rotate or stop the knob, the pawl wheel, the clutch wheel and the winding wheel ; and when the knob is rotated in an opposite direction, the elastic engagement part on the clutch wheel is disengaged from the gear ring on the winding wheel, and the winding wheel is rotated freely.

2. The lacing device according to claim 1, wherein the elastic engagement part comprises an elastic arm and an engagement part engaged with or disengaged from the gear ring on the winding wheel, the engagement part being provided with guide posts which are located in the guide rail of the pawl wheel.

3. The lacing device according to claim 2, wherein a limiting step is respectively provided at a front end and a rear end of the guide rail, and the guide posts are located at the front end and the rear end of the guide rail, such that an elastic force generated by deformation of the elastic arm pushes the guide posts into respective limiting steps.

4. The lacing device according to claim 3, wherein the guide posts are exposed above the guide rail, and the knob is provided with a locking block which locks the guide posts exposed above the guide rail, the locking block is provided with a sliding ramp for the guide posts to slide, and a limit groove is provided at an upper end of the sliding ramp; when the knob is rotated, the guide posts slide relatively between the sliding ramp and the limit groove; a connecting piece is provided between the clutch wheel and the knob, the connecting piece is a cylinder at a center of the clutch wheel, and the cylinder has a sector inserting cavity at a center thereof; and the ratchet wheel is provided with a through hole for the cylinder to pass through, a sector inserting post which has a same radius as the sector inserting cavity and a vertex angle smaller than the inserting cavity is provided below the knob, the sector inserting post being inserted into the sector inserting cavity.

5. The lacing device according to any one of claims 1 to 3, wherein the gear ring is an internal gear located at a periphery of the concave part or an external gear protruding at a center of the concave part.

6. The lacing device according to any one of claims 1 to 3, wherein the connecting piece on the clutch wheel is a cylinder at the center of the clutch wheel, and an inserting cavity is provided at a center of the cylinder, the pawl wheel is provided with a through hole for the cylinder to pass through, and an inserting post with a shape matched with the inserting cavity is provided below the knob, the inserting post being inserted into the inserting cavity.

7. The lacing device according to claim 6, wherein the knob is provided with at least one driver, and the pawl wheel is provided with a step docked with the at least one driver; and when the knob rotates in a rotation direction of the pawl wheel, the step on the pawl wheel is docked with the driver of the pawl wheel.

8. The lacing device according to any one of claims 1 to 3, wherein the connecting piece on the clutch wheel includes at least two cylindrical bodies which are rotationally symmetrical, and inserting holes with shapes and positions matched with the at least two cylindrical bodies are provided at the bottom of the knob, and the at least two cylindrical bodies are inserted into the inserting holes, and the pawl wheel is provided with channels for respective ones of the at least two cylindrical bodies to pass through; and when the knob rotates in the rotation direction of the pawl wheel, the at least two cylindrical bodies are abutted against ends of the channels on the pawl wheel so as to provide rotational torque to the pawl wheel.
